(19) Europäisches Patentamt
European Patent Office
Office européen des brevets

(11) Veröffentlichungsnummer: **0 216 306**
**A2**

(12) # EUROPÄISCHE PATENTANMELDUNG

(21) Anmeldenummer: 86112856.9

(22) Anmeldetag: 17.09.86

(51) Int. Cl.⁴: B01J 23/22 , B01J 23/84 , B01J 23/74 , C10G 49/02

(30) Priorität: 27.09.85 DE 3534552

(43) Veröffentlichungstag der Anmeldung: 01.04.87 Patentblatt 87/14

(84) Benannte Vertragsstaaten: BE DE FR GB NL

(71) Anmelder: **Rheinische Braunkohlenwerke AG.**
**Stüttgenweg 2**
**D-5000 Köln 41(DE)**

(72) Erfinder: **Giehr, Axel, Dr. Dipl.-Chem.**
**Zeisigweg 1**
**D-5047 Wesseling(DE)**
Erfinder: **Hammer, Hartmut, Dr. Dipl.-Chem.**
**Leyboldstrasse 21**
**D-5000 Köln 51(DE)**
Erfinder: **Lenz, Uwe, Dr. rer. nat. Dipl.-Chem.**
**Heideweg 7**
**D-5020 Frechen(DE)**
Erfinder: **Wawrzinek, Joachim**
**Thorrer Strasse 60**
**D-5010 Bergheim 3(DE)**

(74) Vertreter: **Koepsell, Helmut, Dipl.-Ing.**
**Mittelstrasse 7**
**D-5000 Köln 1(DE)**

(54) **Verbesserte Katalysatoren zur Hydrierung von Schwer- und Rückstandsölen sowie festen kohlenstoffhaltigen Substanzen, ihre Herstellung und Verfahren unter Verwendung derselben.**

(57) Die Erfindung betrifft Vanadium und Nickel enthaltende Katalysatoren zur hydrierenden Behandlung von Schwer-und Rückstandsölen und/oder festen kohlenstoffhaltigen Substanzen, ihre Herstellung und Verfahren zur hydrierenden Behandlung von Schwer- und Rüchstandsölen mit diesen Katalysatoren.

**EP 0 216 306 A2**

Xerox Copy Centre

FIG.1

HERDOFENKOKS OHNE DOTIERUNG

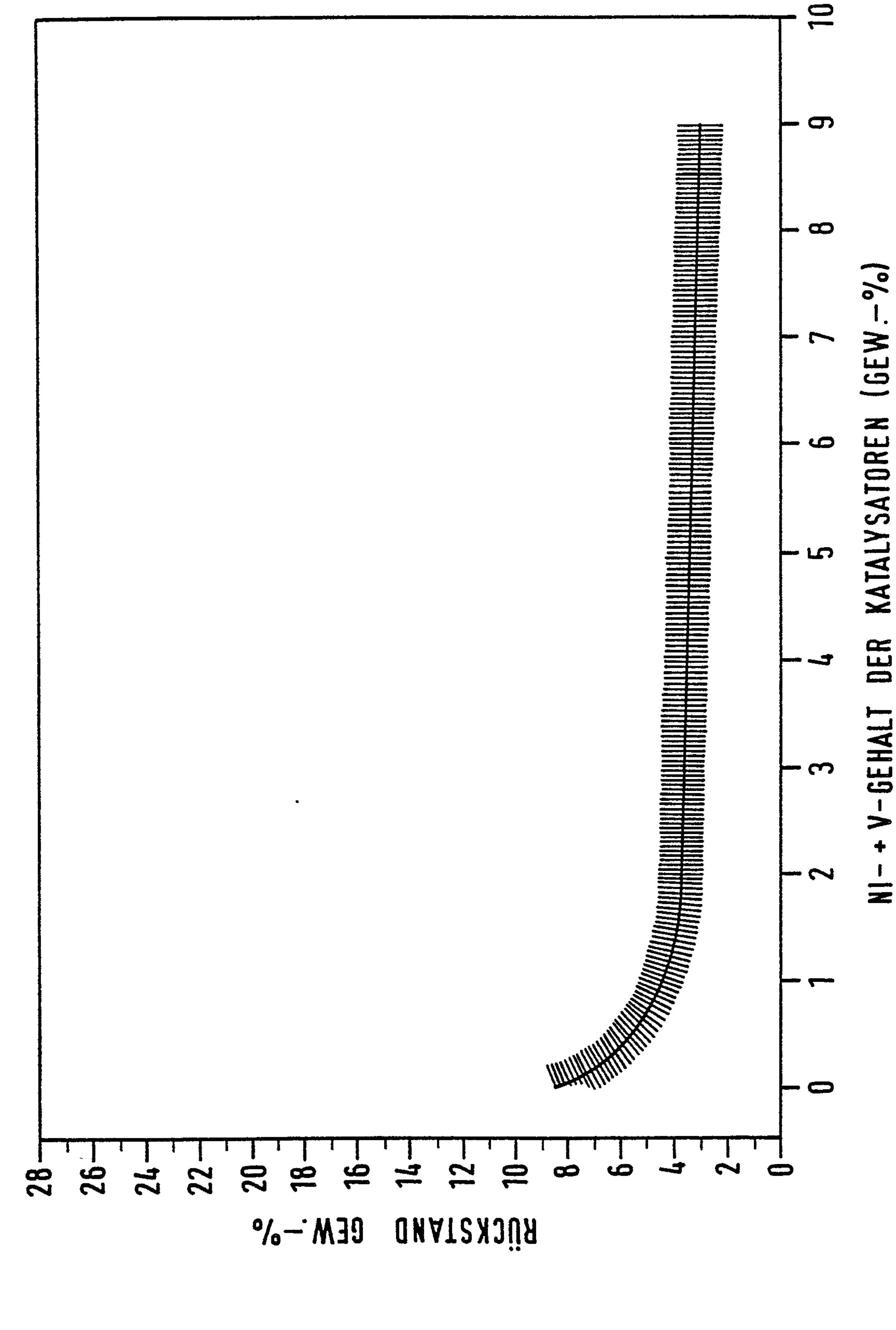

# Verbesserte Katalysatoren zur Hydrierung von Schwer-und Rückstandsölen sowie festen kohlenstoffhaltigen Substanzen, ihre Herstellung und Verfahren unter Verwendung derselben

Die Erfindung betrifft Vanadium und/oder Nickel enthaltende Katalysatoren zur hydrierenden Behandlung von Schwer-und Rückstandsölen, sowie festen kohlenstoffhaltigen Substanzen, ihre Herstellung und Verfahren zur hydrierenden Behandlung von Schwer-und Rückstandsölen mit diesen Katalysatoren.

Für die hydrierende Behandlung von Schwer-und Rückstandsölen, die sowohl kohle-als auch mineralölstämmig sein können, oder von Schieferölen, Ölen aus Teersanden und ähnlichen unter spaltenden Bedingungen, sind zahlreiche Katalysatoren bekannt.

So sind beispielsweise Herdofenkoks und HTW (Hoch-Temperatur-Winkler)-Staub mit und ohne Metalldotierung in der DE-OS 32 32 694 als geeignete Katalysatoren beschrieben. Ebenso ist HKV - (Hydrierende Kohle Vergasung)-Staub mit und ohne Dotierung für die Verwendung in der DE-OS 32 38 689 beschrieben. Auch sonstige Kokse, Aktivkohlen und Stäube, wie beispielsweise Braunkohlegrude (z. B. Krönig in "Die katalytische Druckhydrierung von Kohlen, Teeren und Mineralölen", Springer Verlag, Berlin, Göttingen, Heidelberg, 1950, Seite 79, Zeilen 13 und 14) oder in der Eisenindustrie anfallende Stäube (beispielsweise DE-OS 32 10 500), sind als geeignete Katalysatoren für Sumpfphasenhydrierungen bekannt.

Wie insbesondere aus den Anmeldungen DE-OS 32 32 694 und DE-OS 32 38 689 deutlich wird, kann beispielsweise bei Einsatz von Herdofenkoks (DE-OS 32 32 694), Tab. 2, S. 11) der Rückstand nach Hydrierung eines schweren Einsatzöles auf 13 Gew.-% (Siedebereich > 500°C) gesenkt werden und bei dotiertem Herdofenkoks bzw. dotiertem Hochtemperatur-Winkler-Staub (HTW-Staub) auf 7-8 Gew.-%. Ähnliche Ergebnisse wurden gemäß DE-OS 32 38 689 bei Einsatz von HKV-Staub erhalten (H ydrierende Kohle-Vergasung) Tab. 2, Seite 12.

Es wurde nunmehr überraschend gefunden, daß die Anwendung von Katalysatoren bzw. Katalysatorträgern wie Herdofenkoks, HTW-Staub, HKV-Staub, Gichtgasstaub, Konverterstaub, Aktivkohlen oder deren Gemische, welche Vanadium und/oder Nickel auf der Oberfläche und/oder in Poren auf der Oberfläche enthalten, zu wesentlich verbesserten Ergebnissen, also einer beträchtlichen Abnahme des nach der hydrierenden Behandlung verbleibenden Rückstands führt.

Die Erfindung betrifft daher Katalysatoren zum Behandeln von Schwer-und Rückstandsölen auf Basis Herdofenkoks, HTW-Staub (Hochtemperatur-Winkler), HKV-Staub (Hydrierende-Kohle-Vergasung), Gichtgasstaub, Konverterstaub, Aktivkohlen oder deren Gemischen, wobei diese Dotierungen von Metallen und/oder Metallverbindungen aufweisen können, mit Wasserstoff und/oder Wasserstoff enthaltenden Gasen, die dadurch gekennzeichnet sind, daß die Katalystoren auf der Oberfläche und/oder in Poren auf der Oberfläche Vanadium und/oder Nickel in elementarer Form und/oder in Form von Verbindungen enthalten.

Ferner betrifft die Erfindung ein Verfahren zur Herstellung der Katalystoren, das dadurch gekennzeichnet ist, daß die Hydrierung von Schwer-und Rückstandsölen, die kein oder nur einen geringen Gehalt an Vanadium und/oder Nickel und/oder deren Verbindungen aufweisen, zumindest zeitweise im Gemisch mit Schwer-und Rückstandsölen mit höherem Gehalt an Vanadium und Nickel und/oder deren Verbindungen durchgeführt wird.

Und schließlich betrifft die Erfindung ein Verfahren zur Behandlung von Schwer-und Rückstandsölen mit Wasserstoff und/oder Wasserstoff enthaltenden Gasen in Gegenwart von Katalysatoren und/oder Katalysatorträgern oder deren Gemischen, die Dotierungen von Metallen und/oder Metallverbindungen aufweisen können, das dadurch gekennzeichnet ist, daß die Hydrierung in Gegenwart von Herdofenkoks, HTW-Staub, HKV-Staub, Gichtgasstaube, Konverterstaub, Aktivkohlen oder deren Gemischen, die Vanadium und/oder Nickel und/oder deren Verbindungen auf der Obefläche und/oder in Poren auf der Oberfläche enthalten, durchgeführt wird, wobei die Vanadium und/oder Nickel enthaltenden Katalysatoren in situ gebildet werden können, indem die hydrierende Behandlung zumindest zeitweise in Gegenwart von Vanadium und/oder Nickel und/oder deren Verbindungen enthaltenden Einsatzprodukten durchgeführt wird.

Die Eigenschaften der erfindungsgemäßen Katalysatoren sind in den

Fig. 1 -9

dargestellt, in welchen die Menge des nach der hydrierenden Behandlung verbleibenden Rückstands (Siedepunkt > 500°C) gegen die Menge Vanadium und/oder Nickel aufgetragen ist.

Fig. 1 betrifft Herdofenkoks ohne Dotierung

Fig. 2 betrifft einen mit $FeSO_4$ behandelten Herdofenkoks (5 Gew.-% $FeSO_4$ bezogen auf den Herdofenkoks als Träger)

Fig. 3 betrifft HTW-Staub ohne Dotierung

Fig. 4 betrifft mit $FESO_4$ behandelten HTW-Staub (5 Gew.-% $FeSO_4$ bezogen auf den HTW-Staub als Träger)

Fig. 5 betrifft mit $FeSO_4$ behandelten HKV-Staub (5 Gew.-% $FeSO_4$ bezogen auf den HKV-Staub als Träger)

Fig. 6 betrifft einen mit Ammoniummolybdat behandelten Herdofenkoks (2 Gew.-% Molybdän bezogen auf Herdofenkoks als Träger)

Fig. 7 betrifft Gichtgasstaub ohne Dotierung

Fig. 8 betrifft Konverterstaub ohne Dotierung

Fig. 9 betrifft kommerziell zugängliche Aktivkohle ohne Dotierung.

Die Kurven der Figuren wurden sowohl durch vorheriges Aufbringen von Vanadium und/oder Nickel bzw. deren Verbindungen auf die angegbenen Katalyatoren bzw. Katalysatorträger nach üblichen, dem Stand der Technik entsprechenden Methoden als auch durch die erfindungsgemäß offenbarten Verfahren erhalten, nach denen die Hydrierung von Schwer-und Rückstandsölen entweder zumindest zeitweise in Gegenwart von Vanadium und/oder Nickel in elementarer Form und/oder in Form ihrer Verbindungen enthaltenden Schwer-und/oder Rückstandsölen, die keinen oder nur einen geringen Gehalt an Vanadium und/oder Nickel und/oder deren Verbindungen aufweisen, im Gemisch mit Schwer-und Rückstandsölen mit höherem Gehalt an Vanadium und/oder Nickel und/oder deren Verbindungen erfolgt. Die Dotierung mit Vanadium und/oder Nickel und/oder deren Verbindungen in beiden Verfahrens-varianten nach der Erfindung kann im Falle einer Sumpfphasenhydrierung dadurch beschleunigt oder verbessert werden, daß Heißabscheidersumpf ganz oder teilweise in die Sumpfphasenhydrierung rückgeführt wird.

Ein bevorzugter Katalysator ist Herdofenkoks, der auf der Oberfläche bzw. in den Poren der Oberfläche Nickel und/oder Vanadium enthält.

Erfindungsgemäß kann die hydrierende Behandlung von Schwer-und Rückstandsölen in Gegenwart der erfindungsgemäßen Katalysatoren beispielsweise im Festbett, Fließbett, Wirbelbett oder in der Sumpfphase durchgeführt werden. Eine bevorzugte Ausführungsform ist die Sumpfphase, wobei zumindest teilweise Heißaberscheidersumpf oder das schwere Zwischen-oder Endprodukt der Weiterverarbeitung von Heißabscheidersumpf in die hydrierende Behandlung der Schwer-und Rückstandsöle rückgeführt werden kann, z. B. eines in einer Vakuumdestillation aufgearbeiteten Heißabscheidersumpfes.

Erfindungsgemäß wird die hydrierende Behandlung von Schwer-und Rückstandsölen bei einer Temperatur von 420° bis 520° C, bevorzugt bei 455° bis 485° C, und bei einem Druck von 100 bis 400 bar, bevorzugt bei 200 -325 bar, durchgeführt. Einsatzöle können mineralische Schweröle sein, z. B. Schieferöle, Teersandöle und Rückstandsöle aus der Erdölverarbeitung aber auch beispielsweise Kohlen, wie Braun-und Steinkohle sowie kohlestämmige Öle. Auch Einsatzstoffe, bei denen die Inkohlung weniger fortgeschritten ist, wie z. B. torfähnliche Materialien, können erfindungsgemäß ebenso umgesetzt werden wie beispielsweise cellulosehaltige Materialien, wie Holz und Stroh.

Geeignete mineralische Rückstandsöle sind beispielsweise Vakuumrückstandsöle unterschiedlicher Herkunft, so z. B. aus Arabien Heavy, Iran Heavy, Forcados, Forties, Tia Juana Pesado, Maya/Istmus, Bachaquero u.a. Ebenso können Visbreaker-Rückstandsöle,Asphaltene oder andere in der Raffinerietechnologie und Folgechemie anfallende schwere Öle eingesetzt werden.

Die Reaktorbelastung liegt bei 0,1 -50 Kg/1 $^x$ h, vorzugsweise bei 0,5 -2,5 kg/1 $^x$ h.

Als Dotierung auf den angegebenen Katalysatoren bzw. Katalysatorträgern, wie Herdofenkoks, HTW-Staub, HKV-Staub, Gichtgasstaub, Konverterstaub und Aktivkohlen oder Gemischen, die aus wenigstens zweien dieser Bestandteile estehen sowie auf ähnlichen Materialien, können sowohl Vanadium allein als auch Nickel allein, bzw. deren Verbindungen verwendet werden. Bevorzugt ist jedoch ein Gemisch von Vanadium und Nickel bzw. deren Verbindungen. Unter den hydrierenden Bedingungen entstehen im allgemeinen feinverteilte Niederschläge von metallischem Vanadium und/Nickel. Es können jedoch auch Verbindungen, wie z. B. Sulfide zu den erfindungsgemäßen Ergebnissen führen.

Die oben angegebenen Materialien können erfindungsgemäß auch bereits Dotierungen von Metallen bzw. deren Verbindungen aufweisen, so insbesondere Eisen, Molybdän, Wolfram, Kobalt u.a., oder deren Gemische aus wenigstens zweien dieser Bestandteile. Bevorzugt sind Eisen, Molybdän oder Wolfram und/oder deren Verbindungen.

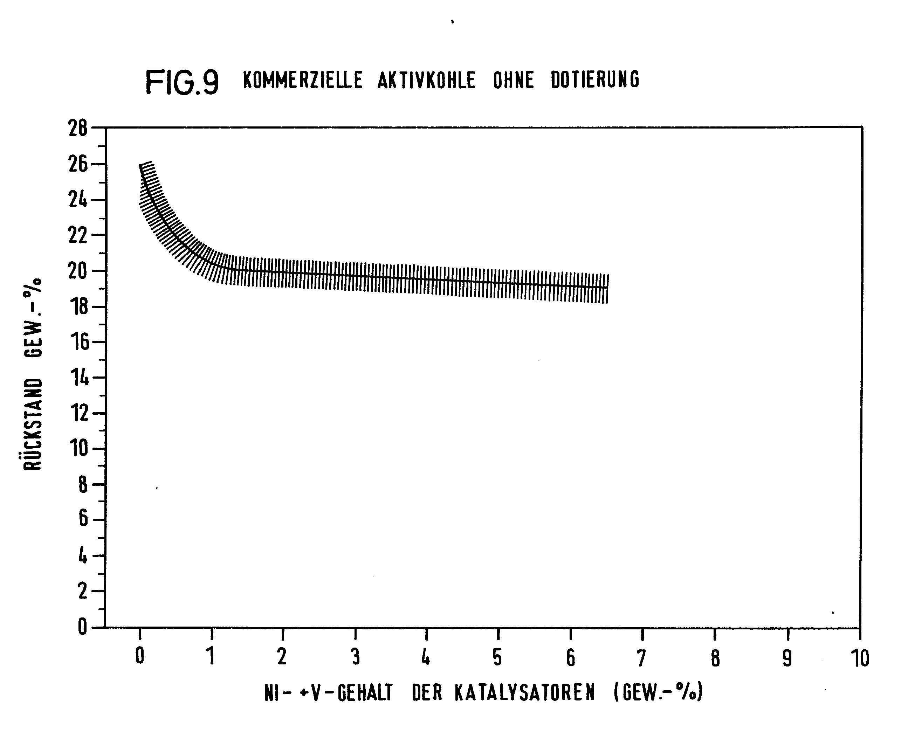

Zur weiteren Erläuterung der vorliegenden Erfindung dienen die Figuren 1 bis 9.

In allen Figuren ist auf der Ordinate die Gesamtmenge an Nickel und Vanadium in Gew.-% aufgetragen und auf der Abszisse der nach der hydrierenden Behandlung verbleibende Rückstand, der oberhalb 500° C siedet. Die Ergebnisse werden mit verschiedenen der genannten Einsatzöle erhalten, wobei sowohl nicht dotierte als auch vordotierte Katalysatoren eingesetzt wurden und sowohl Katalysatoren verwendet wurden, auf denen vor Einsatz in die hydrierende Behandlung bereits Nickel und Vanadium nach üblichen Methoden aufgebracht war, als auch Katalysatoren, die durch in situ-Aufbringen von Vanadium und Nickel hergestellt wurden. Für letzteres setzte man bei der hydrierende Behandlung Öle ein, die Vanadium und Nickel enthielten, die sich zumindest teilweise während der Behandlung auf der Oberfläche des Katalysators bzw. -trägers bzw. in den Poren auf deren Oberfläche niederschlugen. Die veschiedenen Varianten führten zu analogen Ergebnissen. Bei der Hydrierung in der Sumpfphase können, um eine gewisse Menge Vanadium und Nickel aufzubringen, auch Heißabscheiderrückstand bzw. deren Folgeprodukte zumindest teilweise in die Hydrierung rückgeführt werden.

Beispielhaft seien entsprechend den erfindungsgemäßen Verfahren eingesetzte Rückstandsöle genannt:

| | Provenienz | Ni mg/kg | V mg/kg | Verhältn.V/Ni |
|---|---|---|---|---|
| Vakuum-Rückstand | Arab.Heavy | 78 | 462 | 5,9 |
| " " | Iran Heavy | 91 | 297 | 3,3 |
| " " | Forcados | 33 | 14 | 0,4 |
| Visbreaker Rückst. | Forcados | 47 | 18 | 0,4 |
| " " | Forties | 16 | 52 | 3,2 |

Fig. 1 zeigt, daß bei Verwendung von Herdofenkoks ohne vorherige Dotierung und ohne Ni/V-Dotierung die Rückstandsmenge (Siedepunkt > 500° C) bei 8 -9 Gew.-% liegt. Mit zunehmender Dotierung erhält man bereits im Bereich von 3 -4 Gew.-% Ni/V eine Rückstandsverminderung auf ca. 3 -4 Gew.-%, wobei der Rückstand mit zunehmender Dotierung auf 2,5 -3,5 Gew.-% weiter abnimmt.

Setzt man gemäß Fig. 2 Herdofenkoks ein, der mit Eisensulfat dotiert ist (5 Gew.-% $FeSO_4$, bezogen auf Herdofenkoks), so erhält man ohne Dotierung mit Ni/V nach Aufarbeitung des hydrierten Produkts eine Rückstandsmenge von ca. 6 Gew.-% (Siedepunkt > 500° C). Bereits bei 1 -2 Gew.-% Ni/V-Dotierung nimmt die Rückstandsmenge ab auf ca. 3 Gew.-% und verringert sich mit zunehmender Ni/V-Dotierung auf ca. 2 Gew.-%.

In Fig. 3 ist die Rückstandsbildung bei Einsatz von Hochtemperatur-Winklerstaub (HTW) ohne Dotierung dargestellt. Ohne Dotierung mit Ni/V liegt die nach Aufarbeitung des Hydrierprodukts erhaltene Rückstandsmenge (Siedepunkt > 500° C) bei ca. 12 Gew.-%. Bei einer Dotierung von 2 -3 Gew.-% Ni/V ist bereits eine Abnahme des Rückstands auf ca. 5 Gew.-% festzustellen, wobei dieser weiter abnimmt und bei ca. 7 Gew.-% Ni/V bereits bei nur ca. 4 Gew.-% liegt.

Setzt man gemäß Fig. 4 HTW-Staub ein mit 5 Gew.-% $FeSO_4$ als Dotierung, so erreicht man bereits bei 0,5 -1 Gew.-% Ni/V eine Reduzierung des Rückstandes auf ca. 3 Gew.-%.

HKV-Staub, der dotiert ist mit 5 Gew.-% $FeSO_4$, führt gemäß Fig. 5 ebenfalls zu einer Reduzierung des Rückstandes auf ca. 4 Gew.-%.

In Fig. 6 ist die Abnahme des Rückstands bei Einsatz von mit Ammoniummolybdat dotiertem Herdofenkoks dargestellt. Bereits bei ca. 0,5 Gew.-% Ni/V-Dotierung sinkt die Rückstandsmenge auf ca. 3 Gew.-%.

Auch im Falle des Einsatzes von Gichtgasstaub, Konverterstaub und Aktivkohle findet, wie in den Fig. 7 -9 dargestellt, bei Verwendung der erfindungsgemäßen Katalysatoren eine deutliche Abnahme der Rückstandsmenge statt im Vergleich zu undotierten Katalysatoren bzw. Katalysatorträgern.

Zur Verdeutlichung des Einflusses von Vanadium wurden Versuche durchgeführt, wobei beispielhaft Herdofenkoks als Katalysator bzw. Katalysatorträger eingesetzt wurde. Bei einer Gesamtmenge von ca. 3,5 Gew.-% Ni und V wurde bei einem Vanadium zu Nickelverhältnis von 3 : 1 eine Abnahme an Rückstand von ca. 8 auf ca. 5,5 Gew.-% und bei einem V/Ni-Verhältnis von 10 : 1 eine Abnahme auf ca. 4,75 Gew.-% Rückstand festgestellt. Entsprechende Änderungen werden erhalten bei Übergang zu reiner Vanadium-und reiner Nickeldotierung und bei anderen Katalysatoren bzw. -trägern.

Aus den Ergebnissen wird deutlich, daß durch die erfindungsgemäße Dotierung mit Vanadium und Nickel eine bisher dem Fachmann unbekannte und überraschende Reduzierung des Rückstands bei den geschilderten Hydrierungen erhalten wird.

**Ansprüche**

1. Katalysatoren zum Behandeln von Schwer- und Rückstandsölen sowie festen kohlenstoffhaltigen Substanzen auf Basis Herdofenkoks, HTW-Staub (Hochtemperatur-Winkler) HKV-Staub (Hydrierende Kohle Vergasung), Gichtgasstaub, Konverterstaub, Aktivkohle oder Gemischen aus mindestens zwei der genannten Bestandteile, die Dotierungen von Metallen und/oder Metallverbindungen aufweisen können, mit Wasserstoff und/oder Wasserstoff enthaltenden Gasen, dadurch gekennzeichnet, daß die Basiskatalysatoren auf der Oberfläche und/oder in Poren auf der Oberfläche Vanadium und/oder Nickel in elementarer Form und/oder in Form von Verbindungen enthalten.

2. Katalysator nach Anspruch 1, auf Basis Herdofenkoks und/oder mit Metallen und/oder Metallverbindungen dotiertem Herdofenkoks, dadurch gekennzeichnet, daß dieser auf der Oberfläche und/oder in Poren auf der Oberfläche Vanadium und/oder Nickel in elementarer Form und/oder in Form von diesen Verbindungen enthält.

3. Katalysator nach Anspruch 1 auf Basis HTW-Staub und/oder mit Metallen und/oder Metallverbindungen dotiertem HTW-Staub dadurch gekennzeichnet, daß dieser auf der Oberfläche und/oder in Poren auf der Oberfläche Vanadium und/oder Nickel in elementarer Form und/oder in Form von deren Verbindungen enthält.

4. Katalysator nach einem der Ansprüche 1 bis 3, dadurch gekennzeichnet, daß die vorhandene Menge an Vanadium und/oder Nickel und/oder deren Verbindung/en 0,5 bis 7 Gew.-%, vorzugsweise 1 bis 4 Gew.-%, bezogen auf den/die Katalysator/en, beträgt.

5. Katalysator nach Anspruch 4, dadurch gekennzeichnet, daß Vanadium und Nickel oder deren Verbindungen in einem Gwichtsverhältnis von 0,4 bis 10, vorzugsweise 3,2 bis 5,9, vorhanden sind.

6. Verfahren zur Herstellung der Katalysatoren nach den Ansprüchen 1 bis 5, dadurch gekennzeichnet, daß Hydrierungen von Schwer-und Rückstandsölen und festen kohlenstoffhaltigen Substanzen in Gegenwart von Herdofenkoks oder HTW-Staub oder HKV-Staub oder Gichtgasstaub oder Konverterstaub oder Aktivkohle oder Gemischen aus mindestens zwei der genannten Bestandteile zumindest zeitweise in Gegenwart von Vanadium und/oder Nickel in elementarer Form und/oder in Form ihrer Verbindungen enthaltenden Schwer-und/oder Rückstandsölen durchgeführt werden.

7. Verfahren nach Anspruch 6 zur Herstellung der Katalysatoren nach den Ansprüchen 1 bis 5, dadurch gekennzeichnet, daß die Hydrierung von Schwer und Rückstandsölen und festen kohlenstoffhaltigen Substanzen, die keinen oder nur einen geringen Gehalt an Vanadium und/oder Nickel und/oder deren Verbindungen aufweisen, im Gemisch mit Schwer-und Rückstandsölen mit höherem Gehalt an Vanadium und/oder Nickel und/oder deren Verbindungen durchgeführt wird.

8. Verfahren nach Ansprüchen 6 oder 7, dadurch gekennzeichnet, daß in der Sumpfphase unter zumindest teilweiser Rückführung von Heißaberscheidersumpf in die hydrierende Behandlung gearbeitet wird.

9. Verfahren zur Behandlung von Schwer-und Rückstandsölen sowie festen kohlenstoffhaltigen Substanzen mit Wasserstoff und/oder Wasserstoff enthaltenden Gasen in Gegenwart von Katalysatoren und/oder Katalystorträgern oder deren Gemischen, die Dotierungen von Metallen und/oder Metallverbindungen aufweisen können, dadurch gekennzeichnet, daß die Hydrierung in Gegenwart von Herdofenkoks, HTW-Staub, HKV-Staub, Gichtgasstaub, Konverterstaub, Aktivkohlen oder deren Gemischen, die Vanadium und/oder Nickel und/oder deren Verbindungen auf der Oberfläche und/oder in Poren auf der Oberfläche enthalten, durchgeführt wird.

10. Verfahren nach Anspruch 9, dadurch gekennzeichnet, daß die Vanadium und/oder Nickel enthaltenden Katalysatoren in situ gebildet werden können, indem die hydrierende Behandlung zumindest zeitweise in Gegenwart von Vanadium und/oder Nickel und/oder deren Verbindungen enthaltenden Einsatzproduken durchgeführt wird.

11. Verfahren nach Anspruch 9 oder 10, dadurch gekennzeichnet, daß die Hydrierung in Gegenwrt von Herdofenkoks, der Vanadium und/oder Nickel und/oder deren Verbindungen auf der Oberfläche und/oder in Poren auf der Oberfläche enthält, durchgeführt wird.

12. Verfahren nach den Ansprüchen 9 oder 10, dadurch gekennzeichnet, daß die Hydrierung in Gegenwart von HTW-Staub, der Vanadium und/oder Nickel und/oder deren Verbindungen auf der Oberfläche und/oder in Poren auf der Oberfläche enthält, durchgeführt wird.

13. Verfahren nach mindestens einem der Ansprüche 9 bis 11, dadurch gekennzeichnet, daß die hydrierende Behandlung in der Sumpfphase erfolgt und der Heißaberscheidersumpf zumindest teilweise in die Sumpfphasenhydrierung rückgeführt wird.

14. Verfahren nach Anspruch 9 oder 10, dadurch gekennzeichnet, daß der Katalysator in einer Menge von 1 bis 10 Gew.-%, bezogen auf das eingesetzte Schwer-oder Rückstandsöl, verwendet wird.

15. Verfahren nach Anspruch 14, dadurch gekennzeichnet, daß der Katalysator in einer Menge von 2 bis 5 Gew.-%, bezogen auf das eingesetzte Schwer-oder Rückstandsöl, verwendet wird.

16. Verfahren nach mindestens einem der Ansprüche 9 bis 13, dadurch gekennzeichnet, daß es in Gegenwart des Katalysators nach Anspruch 4 und/oder 5 durchgeführt wid.

FIG.1 HERDOFENKOKS OHNE DOTIERUNG

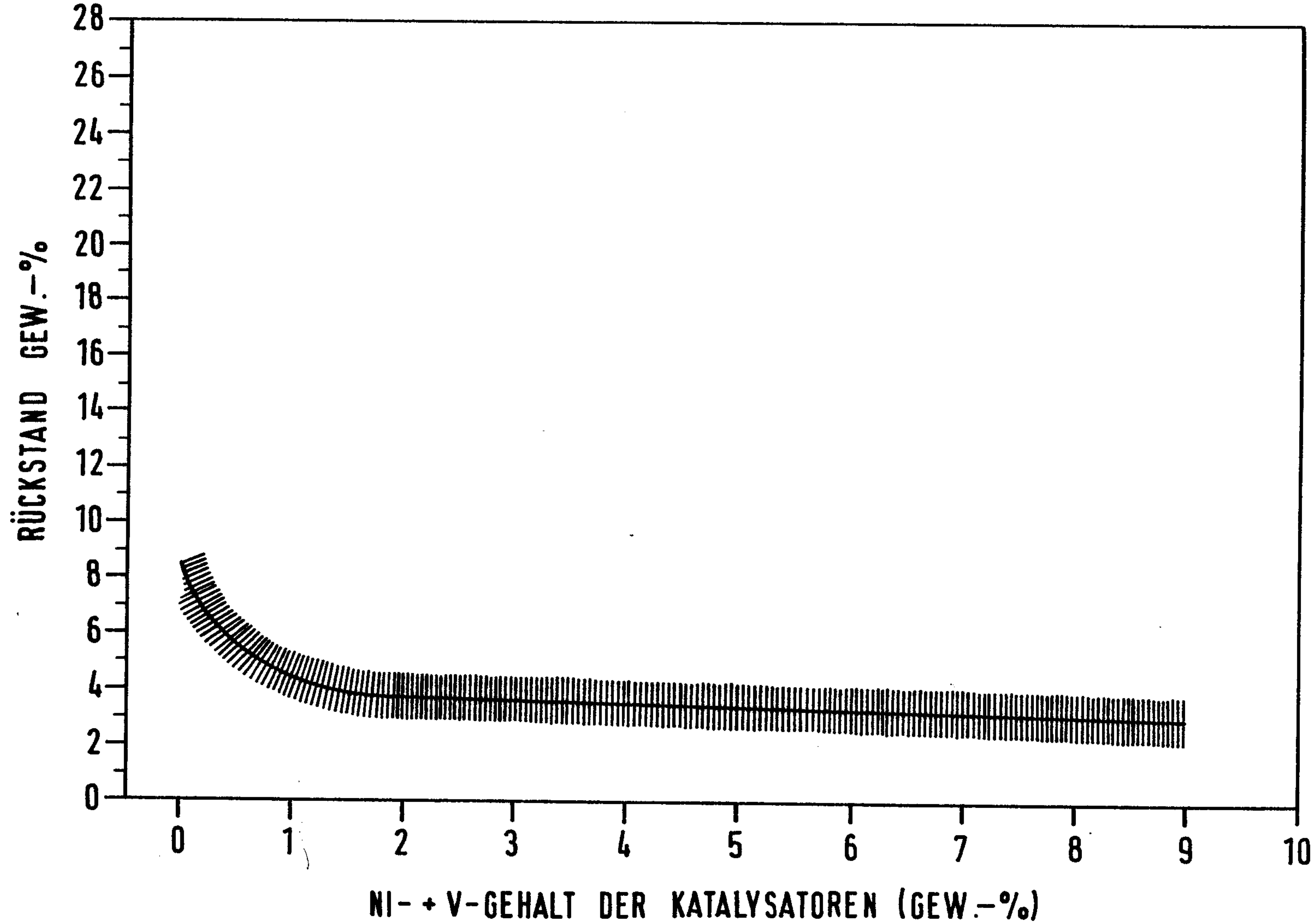

FIG.2

MIT $FESO_4$ BEHANDELTER HERDOFENKOKS
(5 GEW.-% $FESO_4$ BEZOGEN AUF HERDOFENKOKS)

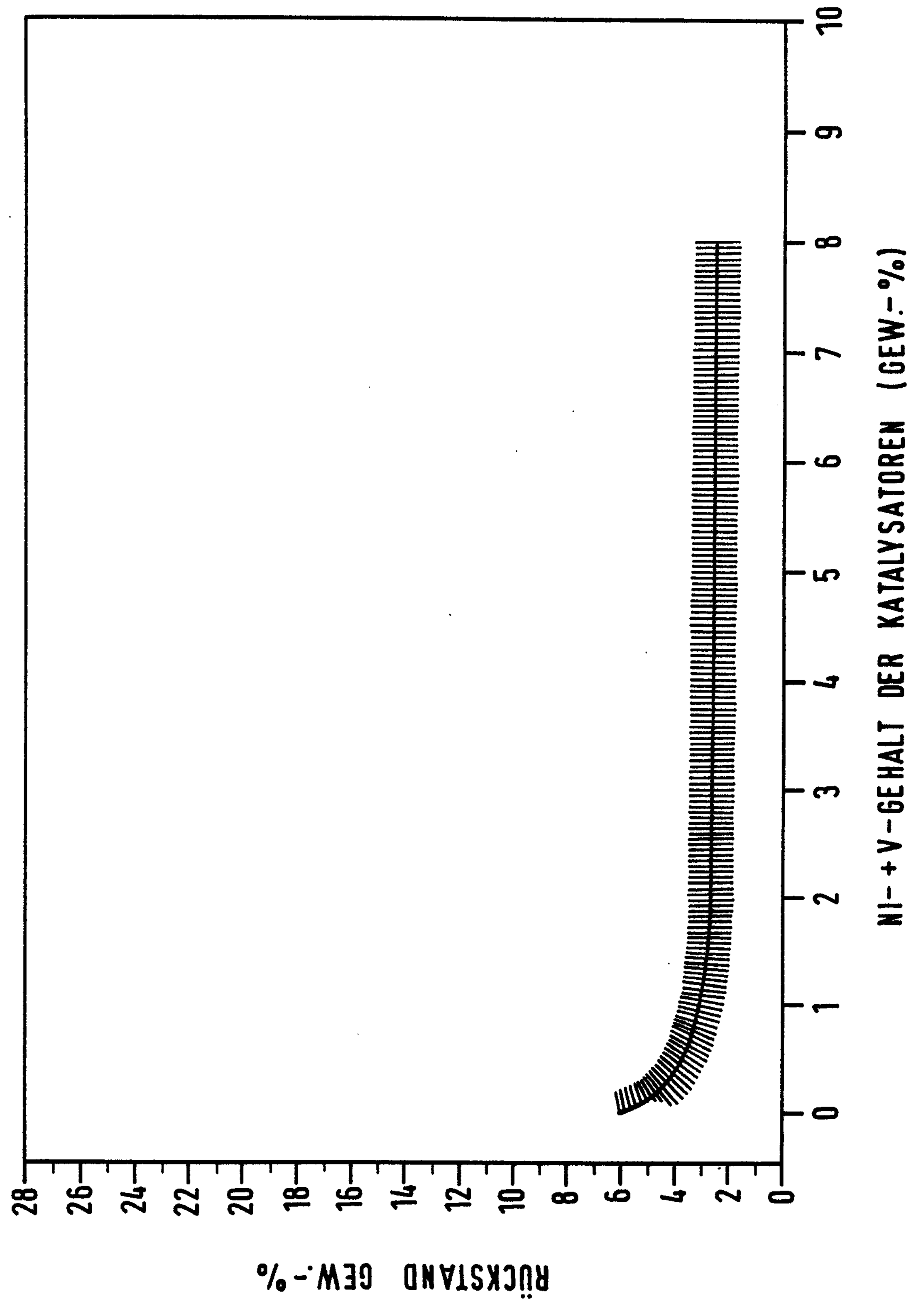

FIG.3 HTW-STAUB OHNE DOTIERUNG

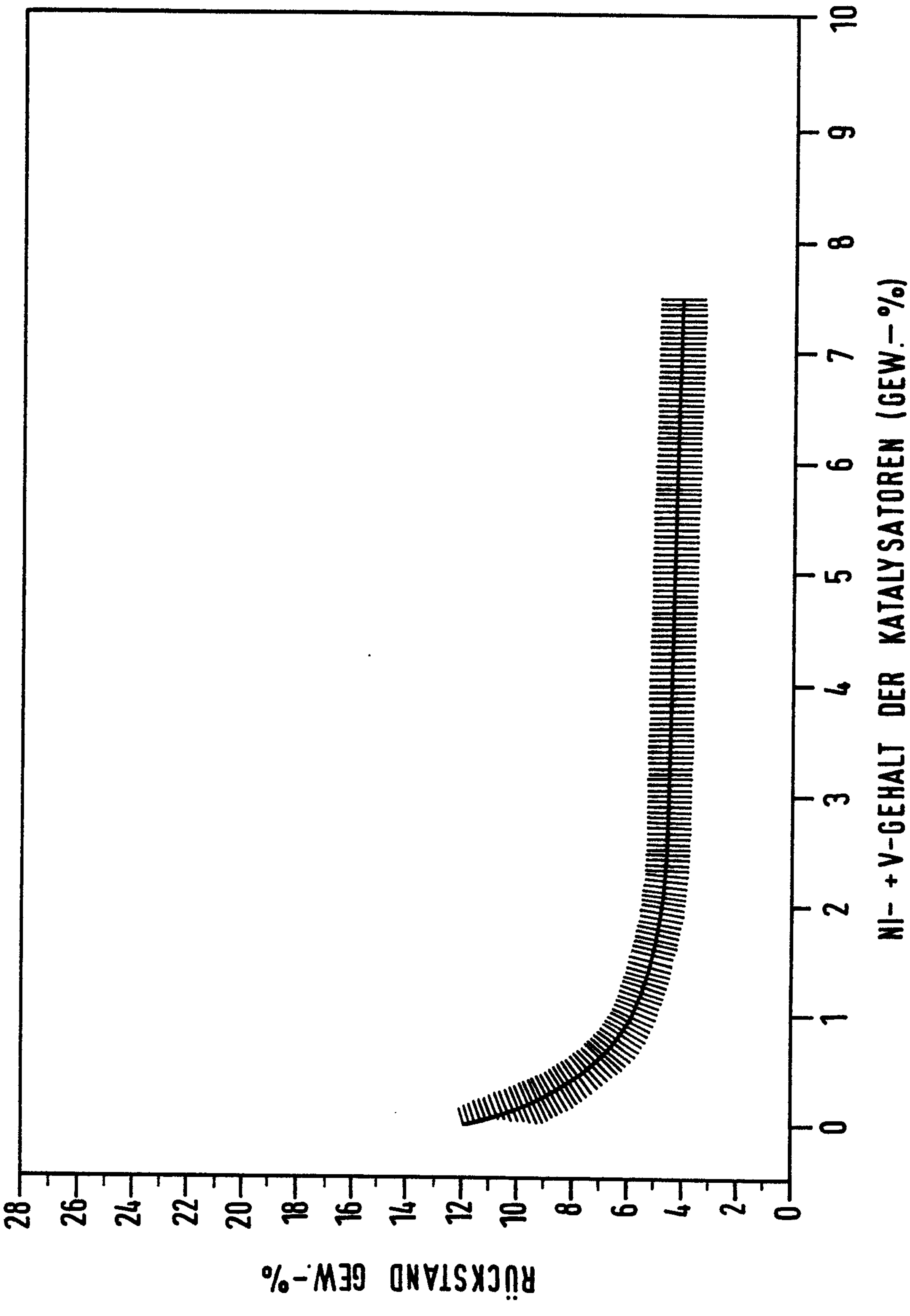

FIG.4

MIT $FESO_4$ BEHANDELTER HTW-STAUB
(5 GEW.-% $FESO_4$ BEZOGEN AUF HTW-STAUB)

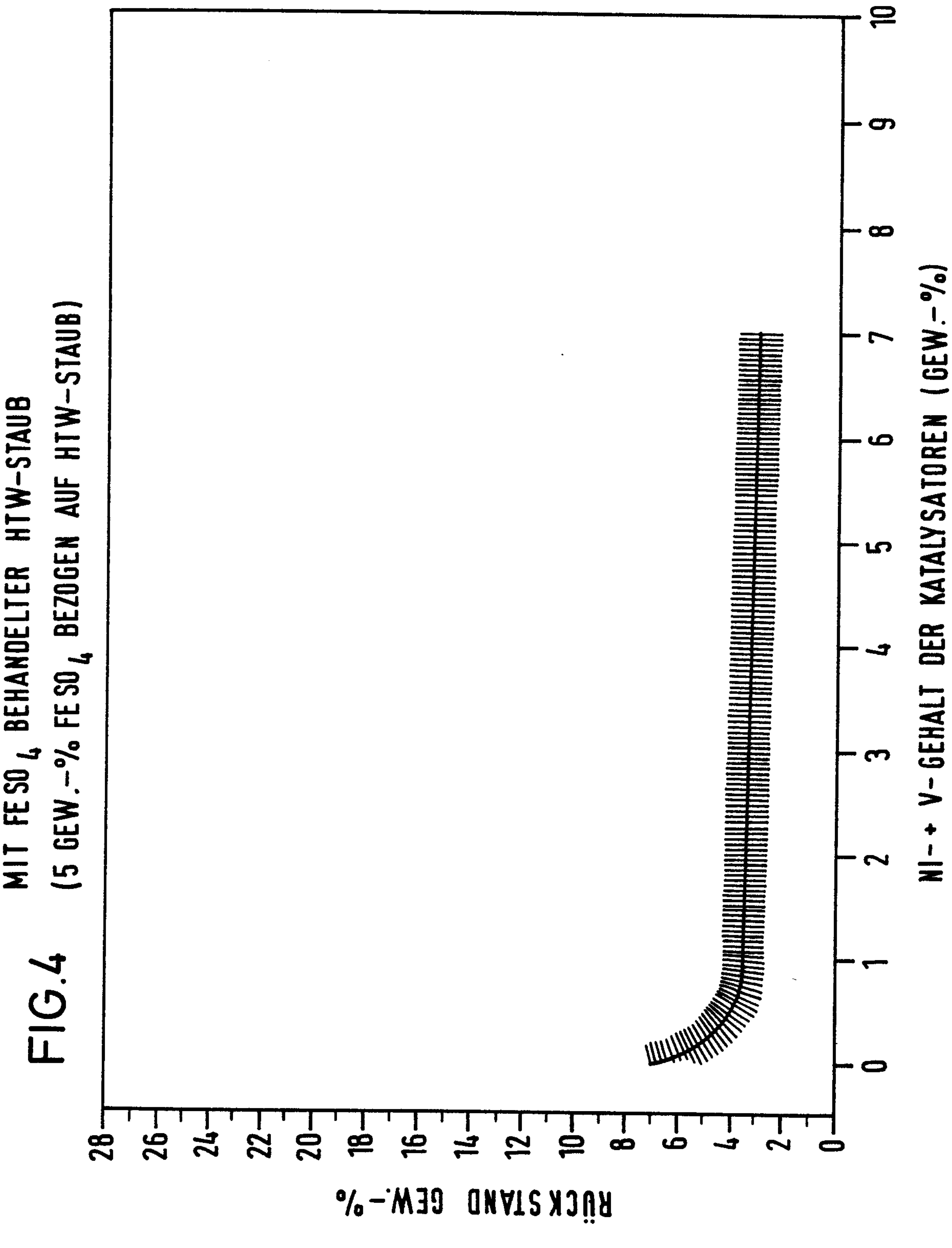

FIG.5

MIT $FESO_4$ BEHANDELTER HKV–STAUB
(5 GEW.-% $FESO_4$ BEZOGEN AUF HKV–STAUB)

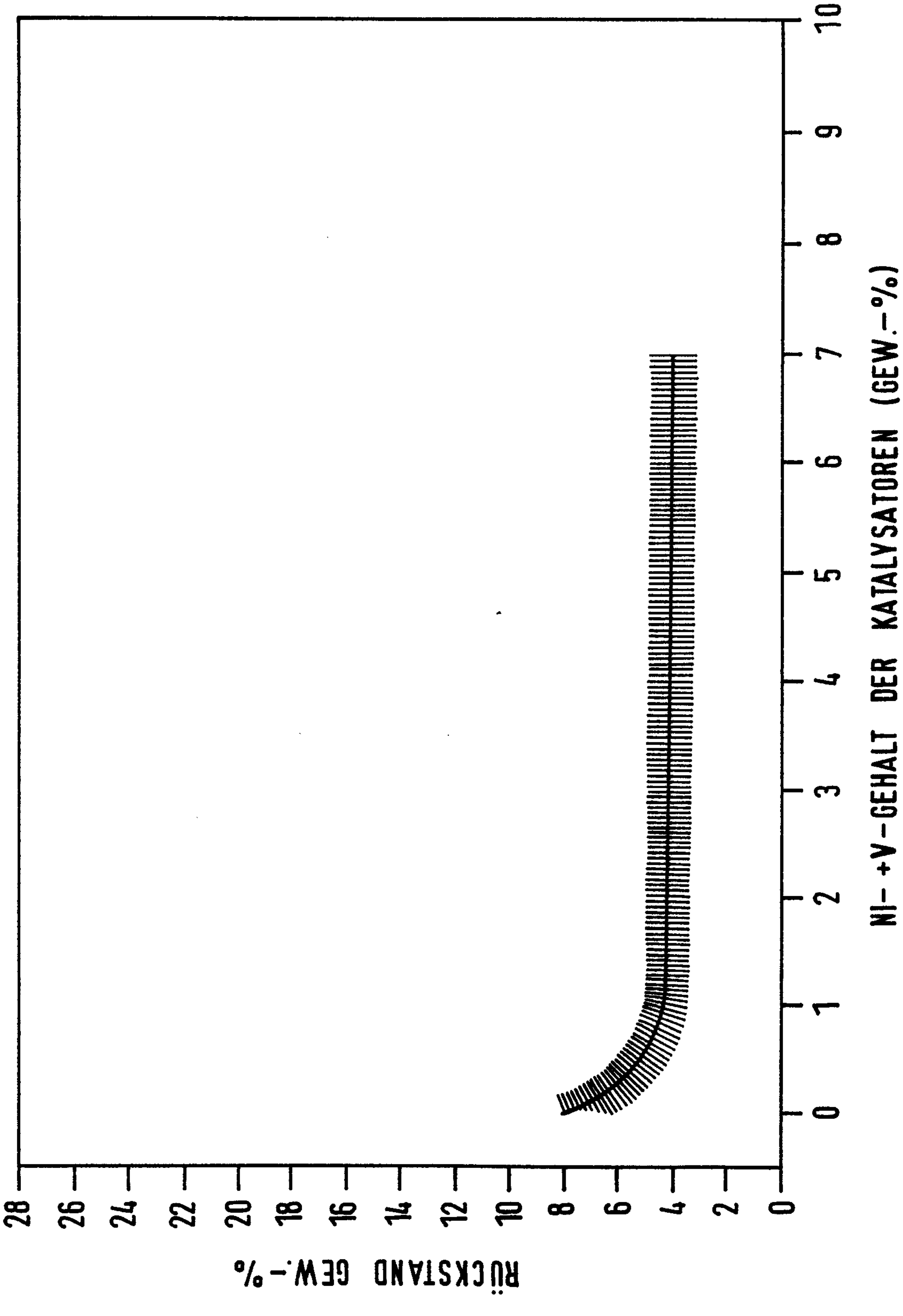

FIG.6

MIT AMMONIUMMOLYBDAT BEHANDELTER HERDOFENKOKS
(2 GEW.-% MOLYBDÄN BEZOGEN AUF HERDOFENKOKS)

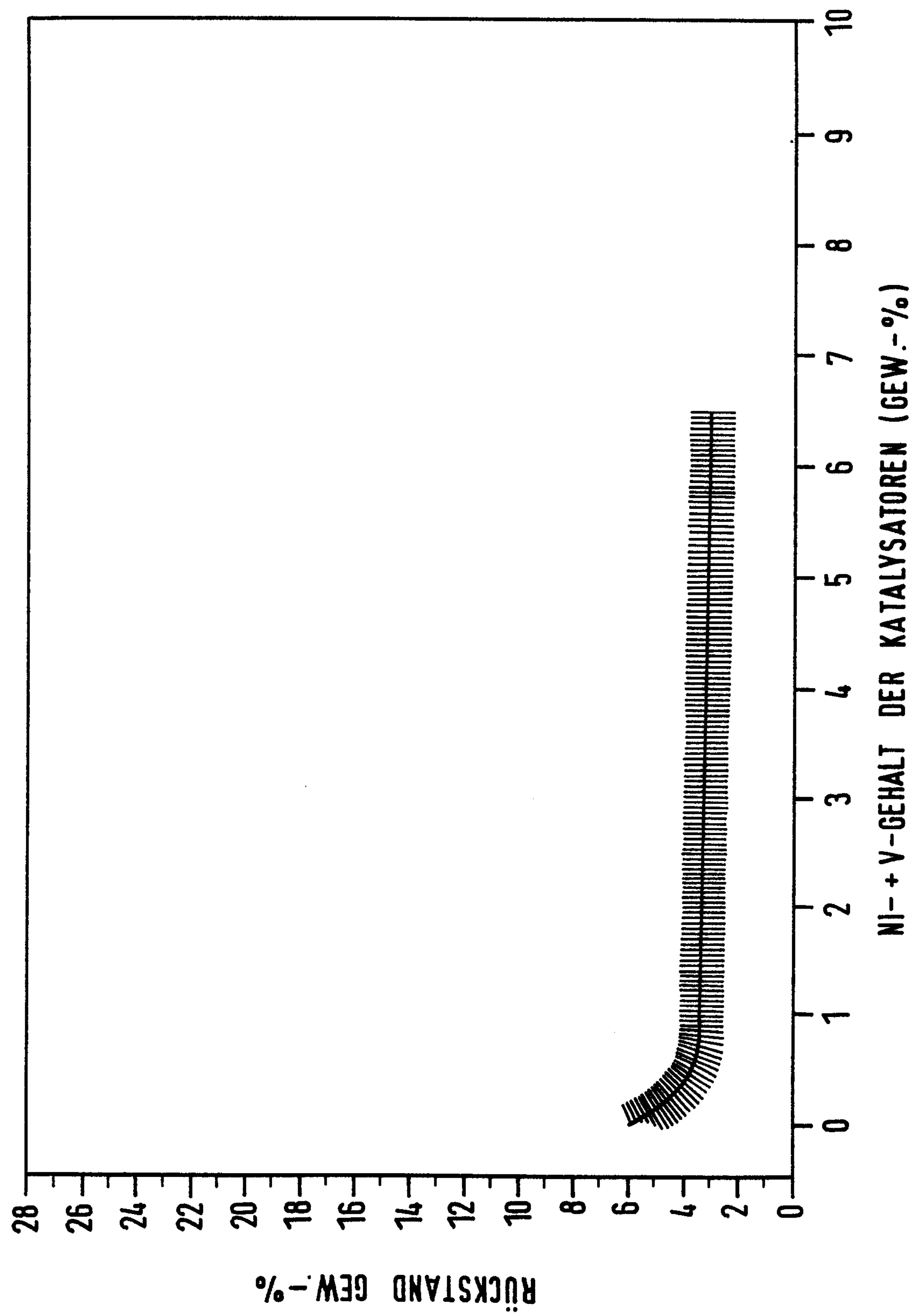

FIG.7 GICHTGASSTAUB OHNE DOTIERUNG

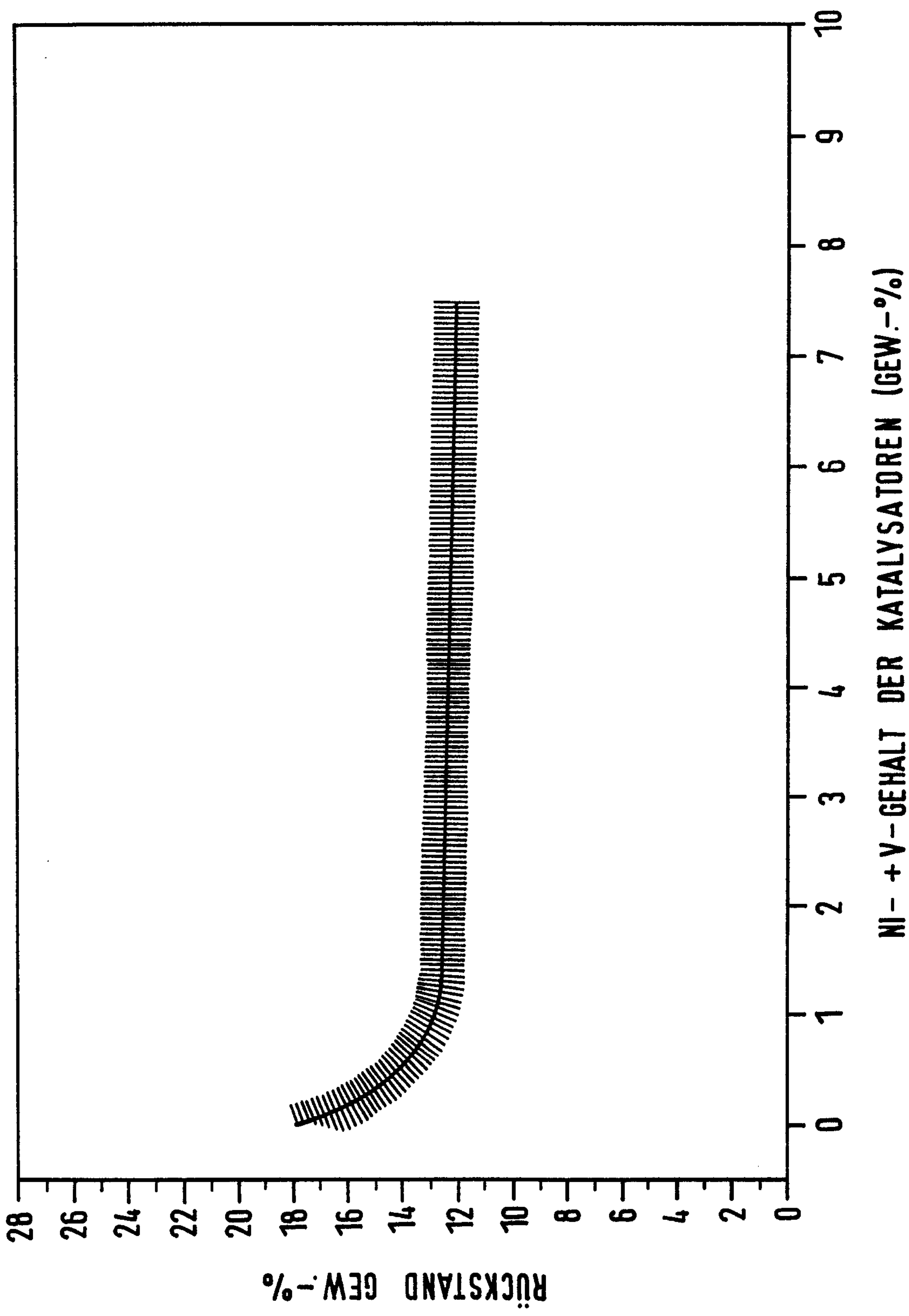

FIG.8 KONVERTERSTAUB OHNE DOTIERUNG

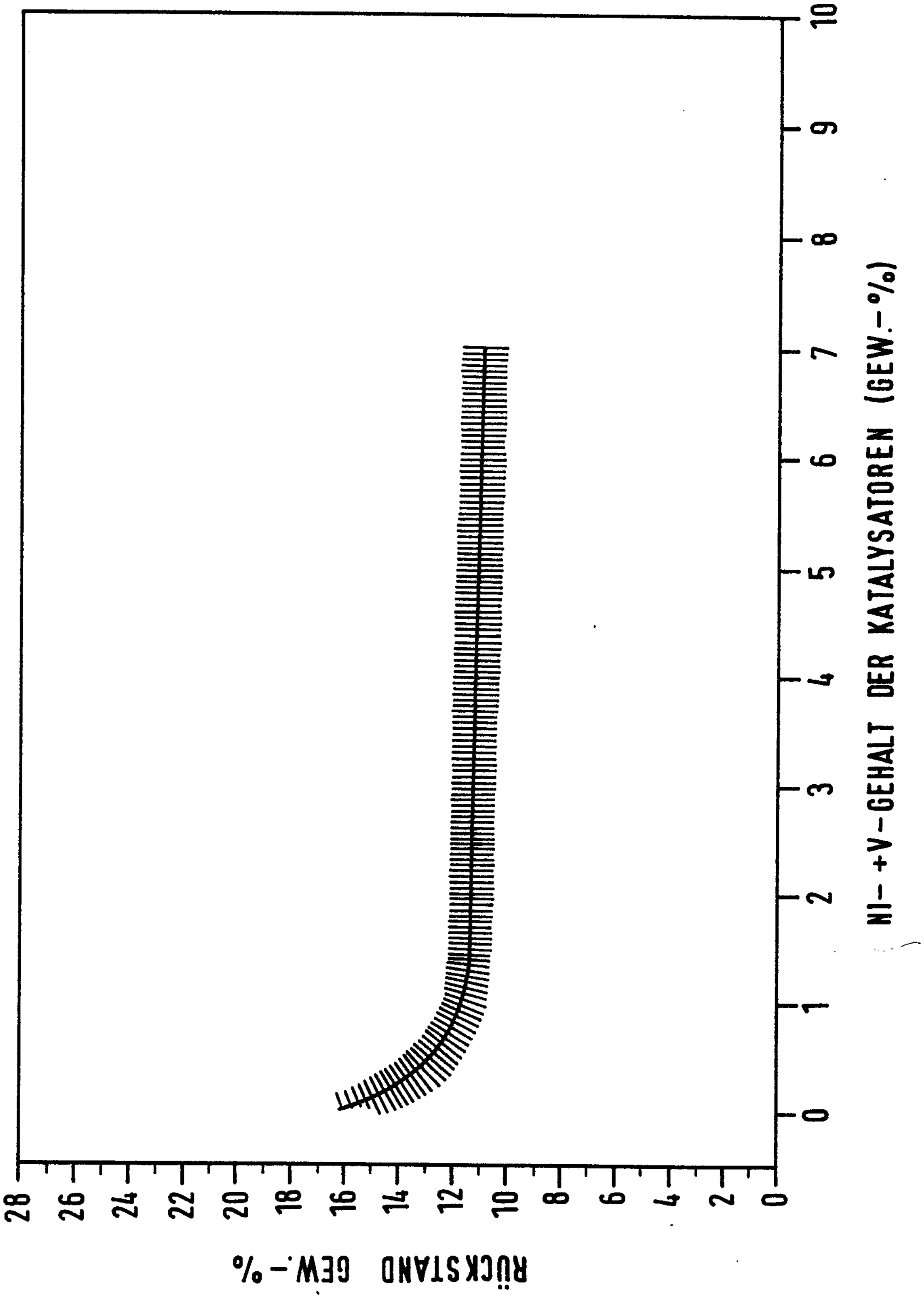

FIG.9 KOMMERZIELLE AKTIVKOHLE OHNE DOTIERUNG